# EUROPÄISCHE PATENTSCHRIFT

(11) **EP 1 386 821 B1**
(45) Veröffentlichungstag und Bekanntmachung des Hinweises auf die Patenterteilung: **11.01.2006**
(21) Anmeldenummer: 03011686.7
(22) Anmeldetag: 23.05.2003
(51) Int. Cl.: B62D 3/12

(54) **Lenkung für Kraftfahrzeuge**
Steering for vehicles
Direction pour véhicules

(30) Priorität: 01.08.2002 DE 10235111
(43) Veröffentlichungstag der Anmeldung: 04.02.2004
(73) Patentinhaber: AUDI AG, 85045 Ingolstadt (DE)
(72) Erfinder: Michel, Wilfried, Dipl.-Ing. (FH), 93339 Riedenburg (DE)
(74) Vertreter: Asch, Konrad

(56) Entgegenhaltungen:
- DE-A- 3 219 176
- DE-A- 19 937 376
- US-A- 6 070 891

## Beschreibung

Die Erfindung betrifft eine Lenkung für Kraftfahrzeuge gemäß dem Oberbegriff des Patentanspruches 1.

Insbesondere bei Kraftfahrzeugen kann die Anordnung des Lenkgetriebes von Zahnstangenlenkungen mit Außenabgriff der Spurstangen Probleme ergeben, insbesondere unter Beachtung des Crashverhaltens derartiger Kraftfahrzeuge bei obenliegender, im Bereich des Wasserkastens befindlicher Lenkung. Dabei kann es bei definierten Vorbaukonstruktionen erwünscht sein, das Lenkgetriebe möglichst tief anzuordnen; d. h. etwa in die Höhe der Anbindung der Spurstangen außen an den Radträgern der gelenkten Vorderräder. Hier kann aber der Anordnung des Lenkgetriebes das Antriebsaggregat mit der Brennkraftmaschine und dem Geschwindigkeits-Wechselgetriebe im Wege stehen bzw. den erforderlichen Einbauraum versperren. Eine solche Anordnung ist auch bekannt aus der DE 199 37 376.

Aufgabe der Erfindung ist es deshalb, eine Lenkung der gattungsgemäßen Art vorzuschlagen, die bei geringem Mehraufwand und bei Aufrechterhaltung der bei Zahnstangenlenkungen günstigen Direktlenkung eine voneinander unabhängige Positionierung des Lenkgetriebes und der Anlenkstellen der Spurstangen ermöglicht.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, einen U-förmigen, biegesteifen Träger mit zwei von zumindest einem Querstab abragenden Armen vorzusehen, an denen die Zahnstange angreift und an deren außerhalb der Zahnstange-Mittelachse liegenden freien Enden die Spurstangen angelenkt sind. Der Querträger bildet somit mit der Zahnstange des Lenkgetriebes einen in sich steifen Verband, der die Lenkbewegungen von der Zahnstange verlustfrei auf die angelenkten Spurstangen überträgt und Biegemomente von der Zahnstange fern hält. Dabei ist die Position des Lenkgetriebes einerseits und der Anlenkstelle der Spurstangen andererseits weitgehendst frei wählbar. Das Lenkgetriebe kann somit unterhalb des Antriebsaggregates an einer geeigneten Stelle (Freiraum im Bereich der Schnittstelle zwischen Brennkraftmaschine, Getriebe und Bodenfreiheit), z. B. zwischen der Brennkraftmaschine und dem Wechselgetriebe angeordnet sein, während die Anlenkstelle der Spurstangen höher und ggf. auch weiter hinten (Schräganordnung des U-förmigen Trägers) positioniert sein kann.

Der U-förmige Träger kann als Profilteil im Querschnitt gesehen ebenfalls U-förmig mit in dessen Arme übergehenden seitlichen Wandabschnitten ausgeführt sein, wodurch bei geringem Gewicht eine hohe Steifigkeit der Konstruktion erzielbar ist. In Verbindung mit Verstrebungen und Verstärkungsstegen bietet sich eine derartige Konstruktion vorteilhaft als Guss- oder Schmiedeteil aus Leichtmetall an mit den bekannten fertigungstechnischen Vorteilen.

Alternativ kann der Querstab auch durch zwei oder mehrere Stäbe, z. B. Rundstäbe gebildet sein, die jeweils für sich gesehen weniger Einbauraum beanspruchen und ggf. noch besser an die Einbauverhältnisse anpassbar sind.

In vorteilhafter Weiterbildung der Erfindung kann der zumindest eine Querstab des U-förmigen Trägers in fahrzeugfesten (d. h. einer starren oder elastischen Verbindung) Lageraufnahmen zusätzlich geführt sein. Damit kann die an der Zahnstange ggf. noch vorhandene Belastung (statisch und dynamisch) aufgrund der Trägheitsmasse des U-förmigen Trägers weiter reduziert werden und es wird eine leichtgängige und biegemomentfreie Lenkbetätigung auch bei hohen Lenkmomenten sichergestellt.

Bevorzugt sind die fahrzeugfesten Lageraufnahmen unmittelbar am Gehäuse des Lenkgetriebes ausgebildet, obwohl eine derartige Aufnahme auch am benachbarten Hilfsrahmen denkbar wäre. Damit kann das Lenkgetriebe mit dem U-förmigen Träger als eine Montageeinheit verbaut werden.

Eine besonders leichtgängige Führung des Querstabes lässt sich erzielen, wenn Kugelumlaufbüchsen anstelle von Gleitlagerbüchsen verwendet werden. Dies kann zur Erzielung einer feinfühligen, leicht ansprechenden Lenkbarkeit des Kraftfahrzeuges von Vorteil sein.

Schließlich kann das Gehäuse des Lenkgetriebes unterhalb eines Freiraumes zwischen dem Geschwindigkeits-Wechselgetriebe des Kraftfahrzeuges und der antreibenden Brennkraftmaschine an einem diese Aggregate tragendem Hilfsrahmen befestigt sein, wodurch einerseits eine ausreichende Bodenfreiheit des Kraftfahrzeuges gesichert und andererseits ein günstiges Crashverhalten ohne der Gefahr des Eindringens von Lenkungsteilen in den Innenraum des Kraftfahrzeuges bei einem Frontalcrash zu befürchten ist. Die Positionierung der Spurstangenanlenkung kann trotzdem in Höhe deren Anlenkung auch an den Radträgern der Radaufhängung liegen, so dass unzulässige Eigenlenkbewegungen weitgehendst vermieden sind.

Die Erfindung hat auch den Vorteil, dass keine Justierung von Vorspur und Sturz erforderlich wird. Weiterhin ergibt sich eine vereinfachte Montage der kompletten Achse mit der darin enthaltenen Lenkung. Im weiteren ist eine Reduzierung der ungefederten Massen (Schwenklager) möglich. Es verbessert sich auch die Abstimmbarkeit der Lenkung (günstiger Verlauf des Spurhebelradius und damit verbunden der Spurstangenkraft). Weiterhin wären Pedalhebel verkürzbar.

Mehrere Ausführungsbeispiele der Erfindung sind im Folgenden mit weiteren Einzelheiten näher beschrieben.

Die anliegende schematische Zeichnung zeigt in:
- Fig. 1: ein Zahnstangen-Lenkgetriebe mit einem U-förmigen Träger als Leichtmetall-Schmiedeteil in raumbildlicher Darstellung;
- Fig. 2: das Zahnstangen-Lenkgetriebe nach Fig. 1, jedoch mit einem teilweise dargestelltem U-förmigen Träger mit zwei Stäben als Querstab;
- Fig. 3: wiederum das Zahnstangen-Lenkgetriebe mit einem rotationssymmetrischen Querstab, der in zwei Lageraufnahmen des Lenkgetriebegehäuses verschiebbar geführt ist; und
- Fig. 4: eine der Lageraufnahmen des Querstabes gemäß Fig. 3 in vergrößerter Darstellung.

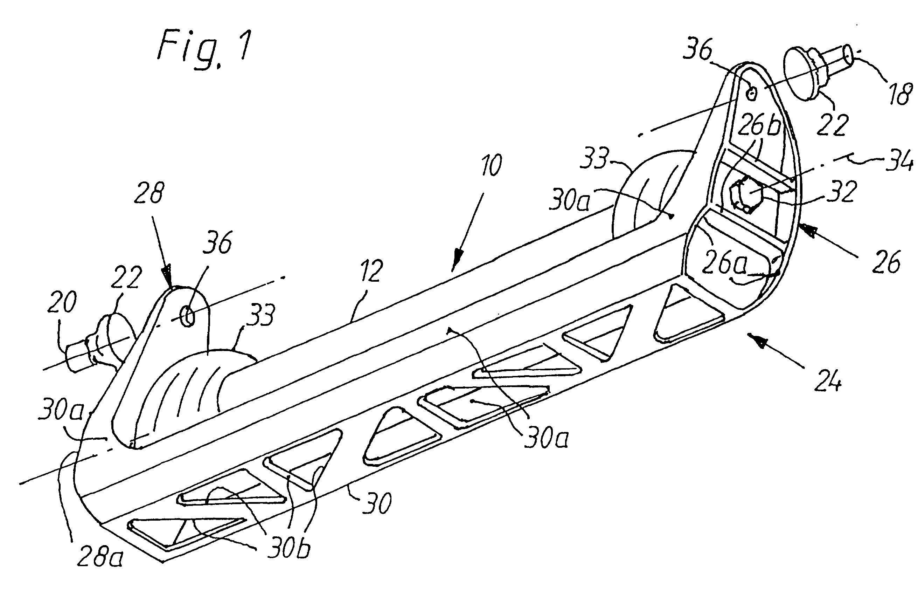

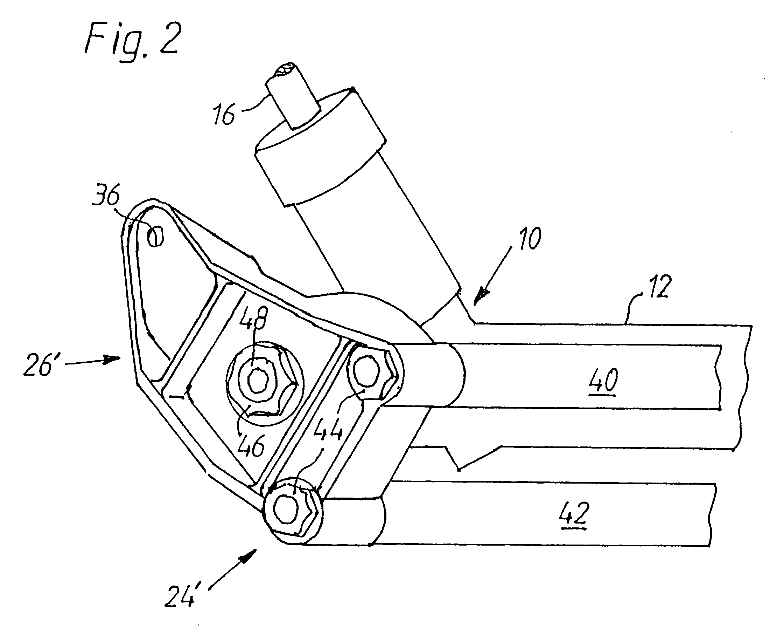

In der Fig. 1 ist mit 10 ein Zahnstangen-Lenkgetriebe bezeichnet, das sich im Wesentlichen aus einem Gehäuse 12 mit einer darin verschiebbar geführten Zahnstange 14 (vgl. auch die Fig. 2 bis 4) und einer Antriebswelle 16 mit einem nicht ersichtlichen Antriebsritzel zusammensetzt. Die Antriebswelle 16 ist an die Lenksäule des Kraftfahrzeuges angeschlossen. Soweit nicht beschrieben ist das Lenkgetriebe 10 bekannter Bauart.

An die Zahnstange 14 sind in noch zu beschreibender Weise im Außenabgriff nur teilweise dargestellte Spurstangen 18, 20 über Kugelgelenke 22 angeschlossen, die an deren anderem Ende mit den Radträgern der vorderen Radaufhängung des Kraftfahrzeuges verbunden sind.

Anstelle des Direktanschlusses der Spurstangen 18, 20 an die aus dem Gehäuse 12 austretenden, stirnseitigen Enden ("Außenabgriff") der Zahnstange 14 sind die Spurstangen 18, 20 an die freien Enden von Armen 26, 28 eines biegesteifen, U-förmigen Trägers 24 angeschlossen, dessen Querstab 30 etwa parallel zum im Wesentlichen rohrförmigen Gehäuse 12 des Lenkgetriebes 10 verläuft.

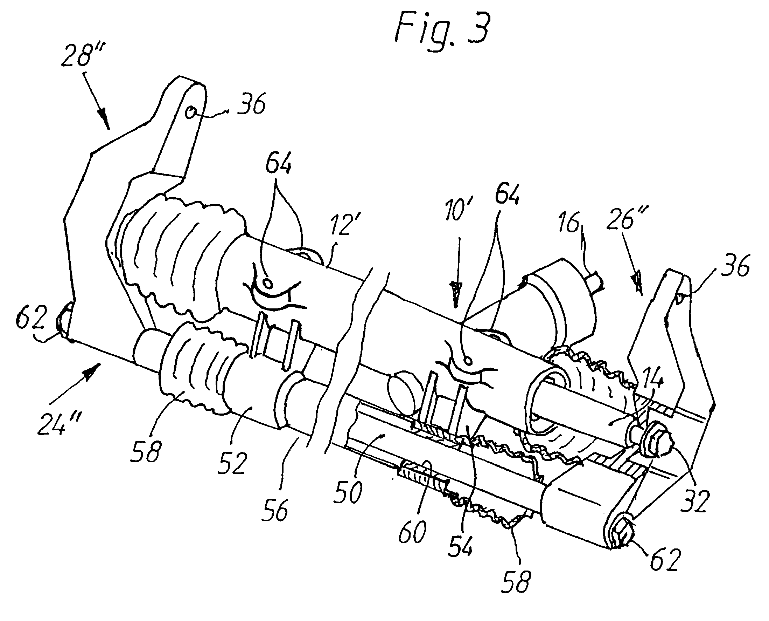

Die stirnseitigen Enden der Zahnstange 14 sind mit den Armen 26, 28 des Trägers 24 über z.B. aus der Fig. 3 ersichtliche Schraubverbindungen mit je einer stirnseitig in Gewindebohrungen der Zahnstange 14 eingreifenden Schraube 32 fest verbunden, wobei diese Anbindung wie ersichtlich in der Mittelachse 34 der Zahnstange 14 liegt, während die Anlenkstelle (bei 36) der Spurstangen 18, 20 axial versetzt dazu positioniert ist. Am Austritt der Zahnstange 14 aus dem Gehäuse 12 sind in bekannter Weise Schutzmanschetten 33 vorgesehen.

Aus dem besagten Versatz resultiert, dass das Lenkgetriebe 10 und der Querstab 30 des Trägers 24 in Einbaulage im Kraftfahrzeug betrachtet vertikal tiefer liegen können als die besagten Anlenkstellen bei 36 bzw. dass dadurch das Lenkgetriebe 10 mit dem Träger 24 um das nicht dargestellte Antriebsaggregat des Kraftfahrzeuges z. B. im Verbindungsbereich von Brennkraftmaschine und Geschwindigkeits-Wechselgetriebe "herum" baubar ist. Die eingezeichnete Verbindungslinie bei 36 würde quasi das Aggregat bzw. Wechselgetriebe durchstoßen.

Das Gehäuse 12 des Lenkgetriebes 10 ist dabei unterhalb eines Freiraumes (nicht dargestellt) zwischen dem Geschwindigkeits-Wechselgetriebe des Kraftfahrzeuges und der antreibenden Brennkraftmaschine an einem diese Aggregate tragendem Hilfsrahmen in an sich bekannter Bauart befestigt.

Um den Träger 24 ausreichend biegesteif und ecksteif auszubilden, ist der Querstab 30 im Querschnitt U-förmig mit in die Arme 26, 28 übergehenden Wandabschnitten 30a ausgebildet.

Ferner sind die Arme 26, 28 im Querschnitt ebenfalls U-förmig gestaltet und es weisen deren seitliche Wandabschnitte 26a, 28a zusätzlich aussteifende Querstege 26b, 28b (es sind nur die Querstege 26b ersichtlich) auf.

Des Weiteren weist der Querstab 30 wie ersichtlich Ausnehmungen zur Gewichtsverminderung auf, die durch aussteifende Verstrebungen 30b unterteilt sind.

Der Träger 24 ist insgesamt mit den etwa senkrecht zur Längserstreckung des Querstabes 30 abragenden Armen 26, 28 aus Leichtmetall bzw. einer Al-Legierung als dünnwandiges, relativ leichtes Schmiedeteil hergestellt, beispielsweise mit einer Knetlegierung. Er kann jedoch auch als ein Blechpressteil gefertigt sein.

In den Fig. 2 bis 4 sind gleiche Teile mit gleichen Bezugszeichen versehen. Zur Vermeidung von Wiederholungen sind nur die wesentlichen Unterschiede zur Fig. 1 erläutert.

Gemäß Fig. 2 ist der Träger 24' derart modifiziert, dass als Querstab zwei (Rund-) Stäbe 40, 42 vorgesehen sind, die jeweils an ihren stirnseitigen Enden mit den Armen 26', 28' (es ist nur der Arm 26' dargestellt) über einheitlich mit 44 bezeichnete Schraubverbindungen fest verbunden sind.

Die Stäbe 40, 42 verlaufen parallel zueinander und zum rohrförmigen Gehäuse 12 des Lenkgetriebes 10. Die Schraubverbindungen der Zahnstange 14 an den Armen 26', 28' sind hier durch Schraubenmuttern 46 bewirkt, die auf entsprechende Gewindeabschnitte 48 an den Enden der Zahnstange 14 aufgeschraubt sind.

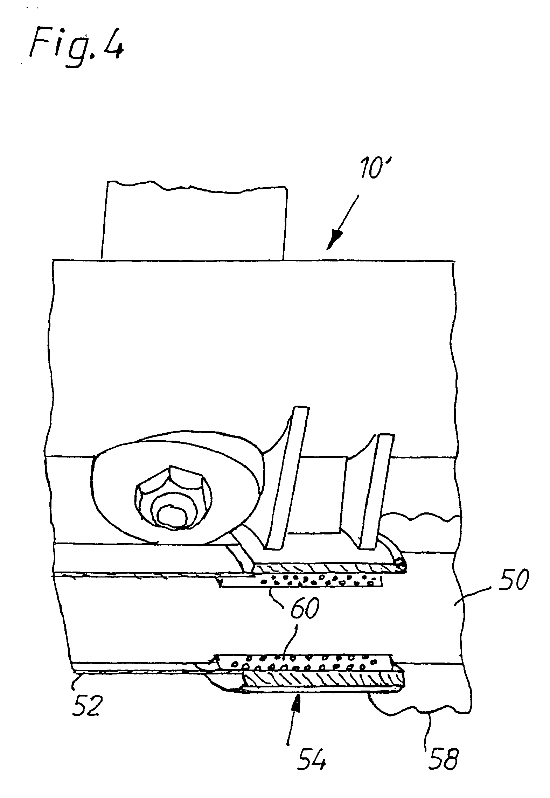

Die Fig. 3 und 4 zeigen ein weiteres Ausführungsbeispiel, bei dem der die beiden Arme 26", 28" verbindende Querstab 50 des U-förmigen Trägers 24" rotationssymmetrisch als Rundstab (oder Rohr) ausgebildet ist und über zwei an das Gehäuse 12' des Lenkgetriebes 10' angeformte Lageraufnahmen 52, 54 zusätzlich zu seiner biegesteifen Gestaltung verschiebbar geführt ist.

Zwischen die beiden Lageraufnahmen 52, 54 ist ein dünnwandiges Schutzrohr 56 eingesetzt, das in Verbindung mit an die Lageraufnahmen 52, 54 ferner anschließende Schutzmanschetten 58 die Lageraufnahmen 52, 54 nach außen abdichtet.

In die Lageraufnahmen 52, 54 (vgl. Fig. 4, Lageraufnahme 54) sind Kugelumlaufbüchsen 60 eingesetzt, deren über den Innenumfang verteilte Kugellaufbahnen und Kugeln in Verschieberichtung ausgerichtet sind und eine besonders leichtgängige Verschiebbarkeit des Trägers 24" bzw. des Querstabes 50 gewährleisten.

Am Gehäuse 12' sind Montagemittel 64 vorgesehen, mittels derer eine Befestigung des Lenkgetriebes 10' z. B. an die Karosserie erfolgen kann.

Es versteht sich, dass der Querstab 50 wiederum mit den Armen 26", 28" wie vorstehend schon beschrieben über Schraubverbindungen 62 biegesteif verbunden ist. Gleiches gilt für die Verbindung der Zahnstange 14 mit den Armen 26", 28".

Bei den beschriebenen Ausführungsbeispielen bildet der Träger 24 mit der Zahnstange 14 ein in sich steifes Parallelogramm, über das die von den desachsiert zur Zahnstange 14 angelenkten Spurstangen 18, 20 ausgehenden Biegemomente bei einer Lenkbetätigung oder bei Lenkreaktionskräften abgestützt werden, so dass die Zahnstange 14 nur mit in der Mittelachse 34 wirkenden Druck- oder Zugkräften belastet wird. Daraus resultiert eine auch bei hohen Lenkkräften leichtgängige Lenkbetätigung ohne stick-slip-Effekt.

## Patentansprüche

1. Lenkung für Kraftfahrzeuge, mit einem Zahnstangen-Lenkgetriebe (10; 10') mit einem fahrzeugfest angeordnetem Gehäuse (12; 12'), in dem eine Zahnstange (14) mit Außenabgriff der zu den gelenkten Rädern führenden Spurstangen (18, 20) verschiebbar geführt ist, wobei ein U-förmiger, biegesteifer Träger (24; 24'; 24") mit zwei von zumindest einem Querstab (30; 40,42; 50) abragenden Armen (26, 28) vorgesehen ist, an denen die Zahnstange (14) angreift und an deren außerhalb der Zahnstangen-Mittelachse (34) liegenden freien Enden (36) die Spurstangen (18, 20) angelenkt sind, und wobei der zumindest eine rotationssymmetrisch ausgebildete Querstab (30; 40; 42; 50) des U-förmigen Trägers (24; 24'; 24") in lenkgetriebegehäusefesten Lageraufnahmen (52, 54) verschiebbar geführt ist, **dadurch gekennzeichnet, dass** der zumindest eine Querstab (30; 40; 42; 50) in Verschieberichtung wirkenden und in die Lageraufnahmen (52, 54) eingesetzte Kugelumlaufbüchsen (60) geführt ist.

2. Lenkung nach Anspruch 1, **dadurch gekennzeichnet, dass** zwischen zwei einem Querstab (50) zugeordneten, beabstandeten Lageraufnahmen (52, 54) ein dünnwandiges Schutzrohr (56) eingesetzt ist.

3. Lenkung nach Anspruch 1 oder 2, **dadurch gekennzeichnet, dass** der Querstab (30) im Querschnitt U-förmig mit in die Arme (26, 28) übergehenden Wandabschnitten (30a) ausgebildet ist.

4. Lenkung nach Anspruch 3, **dadurch gekennzeichnet, dass** die Arme (26, 28) im Querschnitt ebenfalls U-förmig und mit die seitlichen Wandabschnitte (26a, 28a) verbindenden Querstegen (26b, 28b) gestaltet sind.

5. Lenkung nach Anspruch 4, **dadurch gekennzeichnet, dass** zumindest der Querstab (30) mit Ausnehmungen versehen ist, die durch aussteifende Verstrebungen (30b) unterteilt sind.

6. Lenkung nach einem der Ansprüche 1 bis 5, **dadurch gekennzeichnet, dass** der Querstab des U-förmigen Trägers (24') durch zwei parallel zueinander verlaufende Stäbe (40, 42) gebildet ist, die beide an den Armen (26', 28') befestigt sind.

7. Lenkung nach einem der Ansprüche 1 bis 6, **dadurch gekennzeichnet, dass** das Lenkgetriebe (10; 10') und der zumindest eine Querstab (30; 40, 42; 50) des U-förmigen Trägers vertikal unterhalb der Anlenkung (36) der Spurstangen (18, 20) positioniert sind.

8. Lenkung nach Anspruch 7, **dadurch gekennzeichnet, dass** das Gehäuse (12; 12') des Lenkgetriebes (10) unterhalb eines Freiraumes zwischen dem Geschwindigkeits-Wechselgetriebe des Kraftfahrzeuges und der antreibenden Brennkraftmaschine an einem diese Aggregate tragenden Hilfsrahmen befestigt ist.

## Claims

1. Steering for motor vehicles, having rack-and-pinion steering gear (10; 10') having a housing (12; 12') arranged in a fixed position on the vehicle, in which is guided a rack (14) which engages externally with the tie rods (18, 20) leading to the steered wheels, there being provided a U-shaped beam (24; 24'; 24") which is rigid in bending and which has two arms (26, 28) projecting from at least one transverse bar (30; 40, 42; 50), with which arms (26, 28) the rack (14) engages and which arms (26, 28) have the tie rods (18, 20) jointed to their free ends (36) which are situated off the central axis (34) of the rack, and the at least one transverse bar (30; 40, 42; 50) of the U-shaped beam (24; 24'; 24"), which transverse bar (30; 40, 42; 50) is of a form which is symmetrical in rotation, being displaceably guided in mounting receptacles (52, 54) secured to the housing of the rack-and-pinion steering gear, **characterised in that** the at least one transverse bar (30; 40, 42; 50) of the U-shaped beam (24; 24'; 24") is guided in recirculating-ball bushes (60) which operate in the direction of displacement and are inserted in the mounting receptacles (52, 54).

2. Steering according to claim 1, **characterised in that** a thin-walled protective tube (56) is inserted between two spaced mounting receptacles (52, 54) associated with a transverse bar (50).

3. Steering according to claim 1 or 2, **characterised in that** the transverse bar (30) is formed to be U-shaped in cross-section with wall portions (30a) which merge into the arms (26, 28).

4. Steering according to claim 3, **characterised in that** the arms are likewise formed to be U-shaped in cross-section with transverse webs (26b, 28b) which connect the wall portions (26a, 28a).

5. Steering according to claim 4, **characterised in that** the transverse bar (30) is provided with recesses which are divided by stiffening struts (30b).

6. Steering according to one of claims 1 to 5, **characterised in that** the transverse bar of the U-shaped beam (24') is formed by two bars (40, 42) extending parallel to one another which are both fastened to the arms (26', 28').

7. Steering according to one of claims 1 to 6, **characterised in that** the steering gear (10; 10') and the at least one transverse bar (30; 40, 42; 50) of the U-shaped beam are positioned vertically below the joints (36) of the tie rods (18, 20).

8. Steering according to claim 7, **characterised in that** the housing (12; 12') of the steering gear (10) is fastened to a sub-frame carrying the speed-changing gearbox of the motor vehicle and the driving internal combustion engine, below a free space between these assemblies.

## Revendications

1. Direction pour véhicule automobile, avec un mécanisme de direction à crémaillère (10 ; 10') avec un carter (12 ; 12') disposé de façon fixe sur le véhicule, dans lequel une crémaillère (14) est guidée de façon mobile avec une prise extérieure vers les barres d'accouplement (18, 20) menant vers les roues à diriger, un support en forme de U (24 ; 24' ; 24") résistant à la flexion étant prévu avec deux bras (26, 28) saillant à partir d'au moins une barre transversale (30 ; 40, 42 ; 50) sur lesquels la crémaillère (14) s'accroche et sur les extrémités libres (36) situées à l'extérieur de l'axe médian de la crémaillère (34) desquels les barres d'accouplement (18, 20) sont articulées et au moins une barre transversale (30 ; 40, 42 ; 50) conçue de façon symétrique en rotation du support en forme de U (24 ; 24' ; 24") étant guidée de façon mobile dans des systèmes de réception à paliers (52, 54), fixés sur le carter de l'engrenage à crémaillère **caractérisé en ce qu'**au moins une barre transversale (30 ; 40, 42 ; 50) est guidée dans des douilles à recirculation de billes (60) agissant dans le sens de déplacement et intégrés dans les systèmes de réception à paliers (52, 54).

2. Direction selon la revendication 1, **caractérisée en ce qu'**un tube de protection (56) à paroi mince est intégré entre deux systèmes de réception à paliers (52, 54) écartés, associés à une barre transversale (50).

3. Direction selon la revendication 1 ou 2, **caractérisée en ce que** la barre transversale (30) est conçue avec une section transversale en forme de U, avec des tronçons de paroi (30a) qui passent dans les bras (26, 28).

4. Direction selon la revendication 3, **caractérisée en ce que** les bras (26, 28) sont également conçus avec une section transversale en forme de U et avec des entretoises (26b, 28b) reliant les tronçons latéraux de paroi (26a, 28a).

5. Direction selon la revendication 4, **caractérisée en ce qu'**au moins la barre transversale (30) est munie d'évidements qui sont divisés par des entretoisements de renfort (30b).

6. Direction selon l'une quelconque des revendications 1 à 5, **caractérisée en ce que** la barre transversale du support en forme de U (24') est formé par deux barres (40, 42) qui s'étendent en parallèle l'une par rapport à l'autre, qui toutes deux sont fixées sur les bras (26', 28').

7. Direction selon l'une quelconque des revendications 1 à 6, **caractérisée en ce que** la le mécanisme de direction (10 ; 10') et la au moins une barre transversale (30 ; 40, 42 ; 50) du support en forme de U sont positionnés verticalement au-dessous de l'articulation (36) des barres d'accouplement (18, 20).

8. Direction selon la revendication 7, **caractérisée en ce que** le carter (12 ; 12') du mécanisme de direction (10) est fixé au-dessus d'un espace libre entre la boîte de vitesses du véhicule automobile et le moteur à combustion interne d'entraînement, sur un châssis auxiliaire portant ces unités.
